Europäisches Patentamt

European Patent Office

Office européen des brevets

(11) Veröffentlichungsnummer: **0 303 160 B1**

(12) **EUROPÄISCHE PATENTSCHRIFT**

(45) Veröffentlichungstag der Patentschrift: **19.02.92**

(21) Anmeldenummer: **88112549.6**

(22) Anmeldetag: **02.08.88**

(51) Int. Cl.⁵: **B65D 25/16**, B65D 90/04

(54) **Verfahren zum Falten einer flexiblen Innenhülle für zylindrische Tanks.**

(30) Priorität: **04.08.87 DE 3725828**

(43) Veröffentlichungstag der Anmeldung:
**15.02.89 Patentblatt 89/07**

(45) Bekanntmachung des Hinweises auf die
Patenterteilung:
**19.02.92 Patentblatt 92/08**

(84) Benannte Vertragsstaaten:
**AT BE CH DE GB LI NL**

(56) Entgegenhaltungen:
**EP-A- 0 094 600**
**EP-A- 0 098 322**
**US-A- 3 377 766**

(73) Patentinhaber: **NITTEL GMBH & CO. KG**
**Kelsterbacher Strasse 18**
**W-6096 Raunheim/Main(DE)**

(72) Erfinder: **Nittel, Walter F., Dr.**
**Kelsterbacher Strasse 18**
**W-6096 Raunheim/Main(DE)**

(74) Vertreter: **Schaefer, Gerhard, Dr.**
**Seitnerstrasse 13**
**W-8023 Pullach(DE)**

# Beschreibung

Die Erfindung betrifft ein Verfahren zum Falten einer flexiblen Innenhülle für zylindrische Tanks, bestehend aus mindestens zwei an ihren Kanten dicht verbundenen, vorzugsweise mehrlagig ausgebildeten Folien, in denen in einer Folie nahe ihrem einen Ende ein Einfüllstutzen dicht befestigt ist. Der Aufbau der Folien aus mehreren Lagen hat den Vorteil, daß insbesondere beim Befüllen mit unter Druck stehenden Flüssigkeiten eine in einer Lage der Folie vorhandene Undichtigkeit keine nachteiligen Folgen hat. Derartige flexible Innenhüllen sind bekannt. Siehe zum Beispiel EP-A-0.098 322, die einen doppelwandiger oder vierwandiger Foliensack zur Aufnahme einer Flüssigkeit, insbesondere von Bier, beschreibt. Auch die EP-A-0.094 600 beschreibt eine mit einem Einfüllstutzen versehene flexible Innenhülle für die Auskleidung von Transport- oder Lagerbehältern.

Die Verwendung solcher Innenhüllen, die vor jedem Befüllvorgang neu eingebracht werden, machen ein Reinigen des Tanks überflüssig. Sie können insbesondere beim Einsatz im Lebensmittelbereich, insbesondere bei der Befüllung mit Fruchtsäften oder Bier, in sterilem Zustand in den Tank eingebracht werden. Da die Öffnung im Behälter für das Einbringen der Innenhüllen normalerweise klein ist, muß die Innenhülle in zusammengefaltetem Zustand eingebracht werden. Es muß jedoch sichergestellt sein, daß die Entfaltung der Innenhülle korrekt erfolgt, und zwar zweckmäßigerweise gleichzeitig mit dem Befüllvorgang. Dabei muß vermieden werden, daß eine Faltenbildung entsteht, die im Laufe des Befüllvorgangs zu einem Reißen des Materials führt. Besondere Probleme bereitete bisher das Entfalten von Innenhüllen für stehende Tanks.

Der Erfindung liegt daher die Aufgabe zugrunde, eine Falttechnik für flexible Innenhüllen zu schaffen, die ein zuverlässiges Entfalten dieser Innenhüllen, insbesondere in stehenden Tanks, gewährleistet.

Dies wird dadurch erreicht, daß zunächst zwei bezüglich einer Mittellinie sich gegenüberliegende Folienflächen auf der dem Einfüllstutzen abgewandten Seite je um eine in Längsrichtung symmetrisch zur Mittellinie verlaufende Knicklinie so umgeschlagen werden, daß die entstehenden Längskanten einen spitzen Winkel zur Mittellinie bilden, und daß danach die zusammengefalteten Folien von dem dem Einfüllstutzen entfernt liegenden Ende zum Einfüllstutzen hin so aufgerollt werden, daß dieser nach außen vorsteht. Der Winkel zur Mittellinie hat dabei in der Regel eine Größe von weniger als 15°, vorzugsweise von etwa 10°.

Durch die vorbeschriebene Faltung wird sichergestellt, daß sich die gefaltete Innenhülle insbesondere auch in stehende Tanks beim Befüllvorgang gleichmäßig und korrekt entfaltet und daß keine störende Faltenbildung oder gar ein Reißen der Innenhülle auftritt.

Gemäß einer besonders vorteilhaften Ausbildung der Erfindung kann in der Praxis das Umschlagen der Folienflächen längs der Kanten so durchgeführt werden, daß die ursprüngliche Fläche etwa gedrittelt wird. Nach dem Aufrollen der Folien können auf die Enden der entstehenden Rollen dehnfähige Manschetten aufgeschoben werden. Diese können aus ringförmigen, elastischen Bändern oder Schnüren, beispielsweise aus Gummi, bestehen. Sie werden beim Befüllvorgang automatisch an den Rand der in den Tank eingebrachten Rollen geschoben und dabei abgestreift.

Gemäß einer anderen vorteilhaften Ausführungsform können nach den Aufrollen der Folien die entstehenden Rollen in eine Schutzhülle, vorzugsweise aus Kunststoff-Folie, eingebracht werden, die mit einer parallel zu ihrer Längsachse versehenen Soll-Bruchstelle versehen ist. Diese Soll-Bruchstelle kann durch eine Verringerung der Materialstärke der Schutzhülle gebildet sein. Sie kann auch durch eine formschlüssige Verbindung in Art einer Reißverschlußverbindung gebildet sein.

Weitere Einzelheiten und Vorteile der Erfindung können den in der Zeichnung dargestellten Ausführungsbeispielen entnommen werden. Es zeigen:

Fig. 1     eine flexible Innenhülle mit polygonaler Grundfläche;

Fig. 2     eine flexible Innenhülle mit ovaler Grundfläche;

Fig. 3     eine Innenhülle mit arenaförmiger Grundfläche;

Fig. 4     eine Seitenansicht der in den Figuren 1 bis 3 dargestellten Innenhülle;

Fig. 5     eine perspektivische Ansicht einer aufgerollten Folie;

Fig. 6     eine in einen Behälter eingebrachte Schutzhülle während des Befüllvorganges.

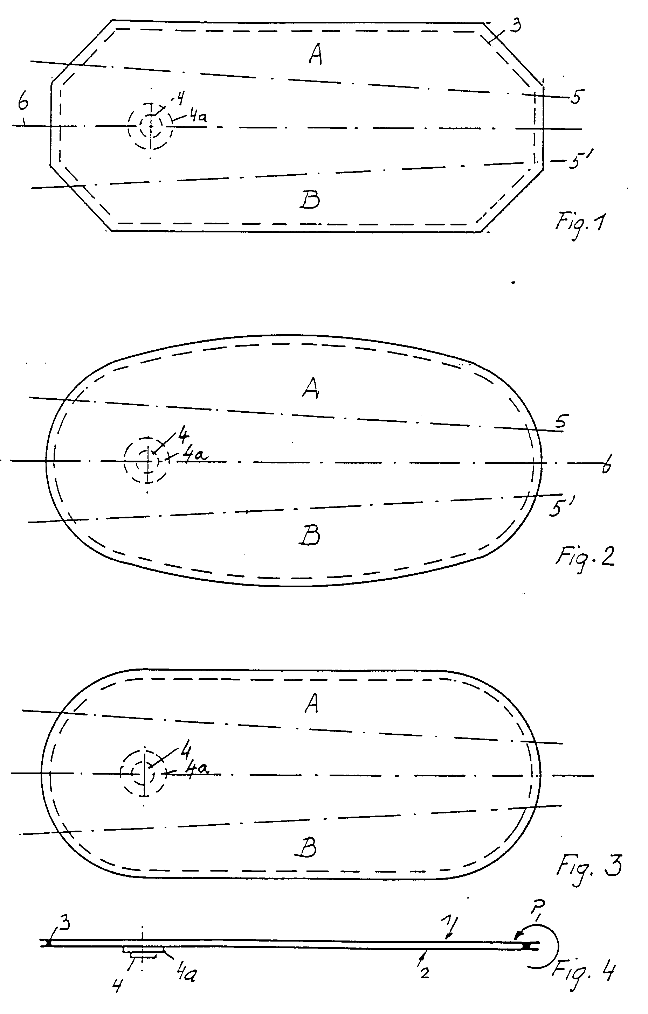

Bei den in den Figuren 1 bis 4 dargestellten Ausführungsbeispielen sind Innenhüllen dargestellt, die verschiedene Grundflächen aufweisen. Die Grundfläche kann dabei polygonal, insbesondere acht- oder mehreckig, oval oder arenaförmig ausgebildet sein.

Fig. 1 zeigt eine Innenhülle mit polygonaler Grundfläche. Dabei ist eine ebene, obere Kunststoff-Folie 1 mit einer gleichförmig ausgebildeten unteren Folie 2 längs ihres Randes 3 verschweißt. Wie bereits eingangs ausgeführt, kann jede der Folien 1 und 2 aus Sicherheitsgründen mehrlagig aufgebaut sein, das heißt, aus mehreren getrennten Folienschichten bestehen. Auf die untere Folie 2 ist ein ebenfalls aus Kunststoff bestehender Auslaufstutzen 4 mit seinem verbreiterten Kragen 4A aufgeschweißt. Bei mehrlagigen Folien sind diese im Bereich des Einfüllstutzens miteinander verschweißt. Mit 5 und 5′ sind Knicklinien bezeichnet, die symmetrisch zur Richtung der Längsachse 6 verlaufen.

Bei den in den Figuren 1 bis 3 dargestellten Ausführungsformen schließen diese Knicklinien 5 und 5′ je einen spitzen Winkel zur Längsachse 6 ein. Dieser Winkel ist in der Regel kleiner als 15°, vorzugsweise etwa 10°.

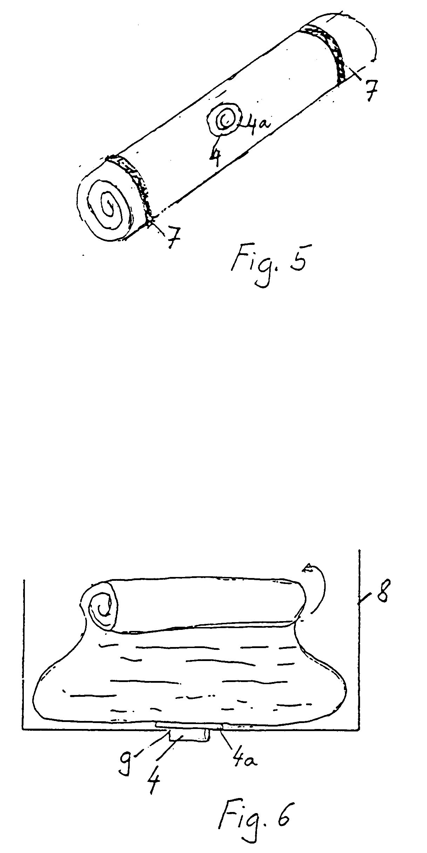

Das erfindungsgemäße Faltverfahren erfolgt in der Weise, daß zunächst die beiden außerhalb der Knicklinien 5 und 5′ liegenden Teile A und B der flexiblen Innenhülle längs dieser Linien auf der dem Einfüllstutzen 4 entgegengesetzt liegenden Seite um 180° umgefaltet werden. Danach wird die Folie in der in Fig. 4 durch einen Pfeil P dargestellten Weise von dem dem Einfüllstutzen entgegengesetzt liegenden Ende her aufgerollt. Die hierdurch gebildete Rolle wird an ihren Enden mit dehnfähigen Manschetten 7 versehen, die vorzugsweise aus Gummiringen bestehen können.

Der Einsatz der erfindungsgemäßen flexiblen Innenhülle geschieht in der Weise, daß die zusammengerollte Folie mit den auf beide Enden aufgeschobenen dehnfähigen Manschetten 7 durch eine Öffnung 9 in den stehenden zylindrischen Tank 8 eingeschoben wird und der Einfüllstutzen 4 in bekannter Weise so befestigt wird, daß er aus der Öffnung 9 nach außen hervorragt. Danach wird mit einer Einfüllapparatur Flüssigkeit, beispielsweise Bier, durch den Einfüllstutzen 4 eingefüllt. Hierdurch wird die Innenhülle entfaltet, so daß sie zunächst die aufgesetzten Manschetten 7 abstreift und sich dann im Laufe des Befüllvorganges an den Boden und die zylindrische Seitenwand des Behälters 8 anlegt. Das Aufrollen der Innenhülle ist in Fig. 6 schematisch durch einen Pfeil dargestellt.

**Patentansprüche**

1. Verfahren zum Falten einer flexiblen Innenhülle für zylindrische Tanks, welche aus mindestens zwei an ihren Kanten dicht verbundenen, vorzugsweise mehrlagig ausgebildeten Folien besteht, wobei in einer Folie nahe ihrem einen Ende ein Einfüllstutzen dicht befestigt ist, dadurch gekennzeichnet, daß zunächst zwei bezüglich einer Mittellinie (6) sich gegenüberliegende Folienflächen (A;B) auf der dem Einfüllstutzen (4) abgewandten Seite je um eine in Längsrichtung symmetrisch zur Mittellinie (6) verlaufende Knicklinie (5; 5′) so auf diese abgewandte Seite umgeschlagen werden, daß die entstehenden Längskanten (5; 5′) einen spitzen Winkel zur Mittellinie (6) bilden, und daß danach die zusammengefalteten Folien von dem dem Einfüllstutzen (4) entfernt liegenden Ende zum Einfüllstutzen (4) hin über die abgewandte Seite so aufgerollt werden, daß dieser nach außen vorsteht.

2. Verfahren nach Anspruch 1, dadurch gekennzeichnet, daß das Umschlagen der Folienflächen (A;B) längs der Kanten (5; 5′) die ursprüngliche Fläche etwa drittelt.

3. Verfahren nach Anspruch 1 oder 2, dadurch gekennzeichnet, daß nach dem Aufrollen der Folien auf die Enden der entstehenden Rollen dehnfähige Manschetten (7) aufgeschoben werden.

4. Verfahren nach einem der Ansprüche 1 oder 3, dadurch gekennzeichnet, daß nach dem Aufrollen der Folien die entstehenden Rollen in eine Schutzhülle eingebracht werden, die mit einer parallel zu ihrer Längsachse verlaufenden Sollbruchstelle versehen ist, welche vorzugsweise durch eine Verringerung ihrer Materialstärke gebildet ist.

**Claims**

1. A method of folding a flexible internal liner for cylindrical tanks which comprises at least two foils which are sealingly connected at their edges and which are preferably of a multi-ply configuration, wherein a filling connection is sealingly fixed in one foil adjacent the one end thereof, characterised in that firstly on the side remote from the filling connection (4) two foil surfaces (A; B) which are in mutually opposite relationship relative to a centre line (6) are each turned over on to said remote side about a respective fold line (5; 5') extending in the longitudinal direction symmetrically relative to the centre line (6) in such a way that the resulting longitudinal edges (5; 5') form an acute angle to the centre line (6) and that thereafter the folded-together foils are rolled up over said remote side from the end which is away from the filling connection (4) towards the filling connection (4) so that the filling connection projects outwardly.

2. A method according to claim 1 characterised in that the operation of turning over the foil surfaces (A; B) along the edges (5; 5') approximately divides the original surface into three.

3. A method according to claim 1 or claim 2 characterised in that after the foils have been rolled up stretchable rings are pushed on to the ends of the resulting rolls.

4.  A method according to one of claims 1 and 3 characterised in that after the foils have been rolled up the resulting rolls are introduced into a protective casing provided with a desired-rupture line which extends parallel to its longitudinal axis and which is preferably formed by a reduction in the thickness of the material thereof.

**Revendications**

1.  Procédé pour plier une gaine interne souple pour des réservoirs cylindriques, qui comprend au moins deux feuilles multicouches de préférence reliées de manière étanche par leurs bords, en ayant fixé de manière étanche à proximité d'une des extrémités sur une des feuilles, une tubulure de remplissage, caractérisée en ce que les deux faces opposées (A-B) de feuille par rapport à une ligne médiane (6) sont rabattues du côté opposé à la tubulure de remplissage (4) autour d'une ligne de pliage (5, 5') s'étendant symétriquement par rapport à la ligne médiane (6) dans le sens longitudinal, de sorte que les bords longitudinaux formés (5, 5') forment un angle aigu avec la ligne médiane (6) et qu'ensuite on roule les feuilles repliées ensemble, en partant de l'extrémité opposée à la tubulure de remplissage (4) vers la tubulure de remplissage (4) sur la face opposée, de sorte que la tubulure reste à l'extérieur.

2.  Procédé selon la revendication 1, caractérisé en ce que le repliage des faces de feuilles (A,B) le long des bords (5, 5') partage environ en trois la surface initiale.

3.  Procédé selon la revendication 1 ou 2, caractérisé en ce qu'après l'enroulement des feuilles on place sur les extrémités des rouleaux formés des bracelets élastiques (7).

4.  Procédé selon l'une des revendications 1 ou 3, caractérisé en ce qu'après l'enroulement de feuilles on place les rouleaux formés dans une enveloppe de protection qui est mesurée d'une zone de faiblesse s'étendant parallèlement à son axe longitudinal, qu'on forme de préférence en diminuant l'épaisseur du matériau.

Fig. 1

Fig. 2

Fig. 3

Fig. 4

Fig. 5

Fig. 6